# FASCICULE DE BREVET EUROPEEN

(11) **EP 1 713 843 B1**
(45) Date de publication et mention de la délivrance du brevet: **03.12.2008**
(21) Numéro de dépôt: 04817610.1
(22) Date de dépôt: 28.12.2004
(51) Int. Cl.: C08F 259/08, C08J 7/18, C08J 3/28

(54) **PROCEDE DE GREFFAGE DE POLYMERE FLUORE ET STRUCTURES MULTICOUCHES COMPRENANT CE POLYMERE GREFFE**
VERFAHREN ZUM PFROPFEN EINES FLUORPOLYMERS UND DAS PFROPFPOLYMER ENTHALTENDE MEHRSCHICHTSTRUKTUREN
METHOD FOR GRAFTING A FLUORINATED POLYMER, AND MULTILAYER STRUCTURES COMPRISING SAID GRAFTED POLYMER

(30) Priorité: 29.12.2003 FR 0315520
(43) Date de publication de la demande: 25.10.2006
(73) Titulaire: ARKEMA FRANCE, 92700 Colombes (FR)
(72) Inventeur: BONNET, Anthony, F-27170 Beaumont Le Roger (FR); CHOPINEZ, Fabrice 40 bis, rue de Pannette, F-2700 Evreux (FR); SEBIRE, Pascal 7, chemin de Saint-Clair, F-27300 Saint-Aubin le Vertueux (FR); TRIBALLIER, Karine, F-27800 Bosrobert (FR); WERTH, Michael, F-27300 Bernay (FR); STENG, Michaela, 75017 Paris (FR)
(86) Numéro de dépôt international: PCT/FR2004/003399
(87) Numéro de publication internationale: WO 2005/068522

(56) Documents cités:
- EP-A- 0 163 825
- EP-A- 0 367 579
- EP-A- 1 227 134
- WO-A-90/15828
- CH-A5- 654 318
- US-A- 3 846 267
- US-A- 4 353 961
- US-A- 5 409 997

## Description

### [Domaine de l'invention]

Les polymères fluorés, par exemple ceux à base de fluorure de vinylidène CF₂=CH₂ (VDF) tels que le PVDF (polyfluorure de vinylidène) sont connus pour offrir d'excellentes propriétés de stabilité mécanique, une très grande inertie chimique, ainsi qu'une bonne résistance au vieillissement. Ces qualités sont exploitées pour des domaines d'application variés. Cependant, l'inertie chimique des polymères fluorés fait qu'il est difficile de les coller sur d'autres matériaux. La Demanderesse a trouvé un procédé permettant de modifier le polymère fluoré afin d'améliorer le collage des polymères fluorés sur des matériaux, ce procédé consistant à greffer par irradiation un composé greffable présentant une fonction réactive. Le greffage consiste à mélanger à l'état fondu le polymère fluoré et le composé greffable qu'on veut greffer sur ledit polymère fluoré puis le mélange obtenu se présentant sous forme divisée telle que des granulés est irradié. L'irradiation est par exemple réalisée à l'aide d'une bombe au cobalt.

A l'issue de l'irradiation, il se produit souvent une déstabilisation du polymère fluoré. Celle-ci peut se manifester par un changement de couleur (souvent un jaunissement, voire un brunissement plus ou moins marqué) du polymère fluoré, qui, bien que ne nuisant pas aux propriétés d'adhésion du polymère fluoré, constitue un désavantage sérieux. Le changement de couleur peut survenir lors de l'irradiation elle-même ou bien lorsque le polymère fluoré modifié est refondu, par exemple lors d'une éventuelle étape de dévolatilisation en extrudeuse ou bien lorsque le polymère fluoré modifié est mis en forme. Lors de l'irradiation, il se produit aussi un dégagement de HF qui peut jouer le rôle de catalyseur dans le mécanisme de déstabilisation, de façon similaire à ce qui se passe dans le cas du PVC.

La présente invention décrit un procédé permettant d'éviter la déstabilisation du polymère fluoré lors du greffage sous irradiation consistant à ajouter un agent stabilisant au polymère fluoré avant l'irradiation, l'agent stabilisant étant un sel métallique greffable ou un mélange d'un sel métallique greffable et d'un antioxydant.

### [L'art antérieur et le problème technique]

Le brevet EP 214880 décrit un procédé de fabrication de copolymères de polyfluorure de vinylidène par greffage d'un monomère sur le polyfluorure de vinylidène au moyen de rayonnements ionisants et qui comprend les étapes successives suivantes:
a)-tremper une poudre ou un film de polyfluorure de vinylidène dans une solution d'un monomère choisi dans le groupe comprenant l'acrylamide, le styrène, le méthylstyrène, l'allylglycidyl éther, la vinyl-2 pyridine, la vinyl-4 pyridine, la méthyl-2-vinyl-5 pyridine, les acrylate et méthacrylate de diméthylaminoéthyle, les acrylate et méthacrylate de diméthylaminopropyle, les acrylate et méthacrylate de diéthylaminoéthyle, les acrylate et méthacrylate de diéthylaminopropyle, la diméthylaminopropyl méthacrylamide, la N-vinyl pyrrolidone, la N-vinyl caprolactone, les acyloxy et hydroxystyrènes, l'acide vinyl sulfonique et ses dérivés, l'acide acrylique et l'acide méthacrylique, pour imprégner dudit monomère la poudre ou le film de polyfluorure de vinylidène,
b)- irradier la poudre ou le film imprégné au moyen de rayonnements ionisants, en l'absence d'oxygène, et
c)- soumettre ensuite le copolymère greffé obtenu à une réaction chimique pour lui conférer un caractère ionique lorsque le monomère greffé n'a pas de caractère ionique.

La demande de brevet WO 0017889 décrit des revêtements de câbles électriques comprenant successivement une couche constituée d'un terpolymère éthylène-acrylate d'alkyle-anhydride maléïque et une couche d'un copolymère fluoré VDF/HFP. Pour améliorer l'adhérence de ces couches, on soumet l'ensemble à des radiations ionisantes.

Le brevet US 5576106 décrit un procédé pour greffer un monomère fonctionnel insaturé sur la surface d'un polymère fluoré en poudre. On mélange de l'anhydride maléique en poudre et le polymère fluoré puis on les met dans un sac en polyéthylène et après avoir chassé l'air contenu dans le sac on soumet le sac contenant le mélange de poudre à une irradiation comprise entre 3 et 6 Mrad. Selon une variante l'anhydride maléïque est dissous dans l'acétone puis on mélange l'ensemble avec le polymère fluoré en poudre et ensuite on évapore l'acétone. On irradie ensuite comme ci-dessus. Le polymère fluoré modifié par greffage par irradiation est ensuite utilisé dans des structures multicouches. Dans tous les exemples, on n'utilise que des élastomères fluorés. Les forces de pelage entre une couche de polymère fluoré modifié par greffage par irradiation selon ces arts antérieurs et un autre matériau sont insuffisantes pour de nombreuses applications en particulier dans les structures comprenant des polyoléfines.

Le brevet US 5409997 décrit une composition à base d'un terpolymère éthylène/tétrafluoroéthylène/termonomère réticulé à l'aide d'un composé difonctionnel stable jusqu'à 200°C et au-delà et qui a été greffé par irradiation. Les composés difonctionnels préférés sont les di(méth)acrylates métalliques, tels que par exemple le diacrylate ou le diméthacrylate de zinc.

### [Brève description de l'invention]

La présente invention concerne un procédé de greffage par irradiation d'un composé greffable sur un polymère fluoré permettant d'éviter la déstabilisation du polymère fluoré comprenant les étapes suivantes :
a) on mélange le polymère fluoré à l'état fondu avec un composé greffable ;
b) le mélange obtenu en a) est mis sous forme de films, de plaques, de granulés ou de poudre ;
c) les produits de l'étape b) sont soumis, à une irradiation photonique (γ) ou électronique (β) sous une dose comprise entre 0,5 et 15 Mrad ;
d) éventuellement on soumet les produits de l'étape c) à un lavage et/ou un dégazage ;
et dans lequel un agent stabilisant est ajouté au polymère fluoré.

L'agent stabilisant est un sel métallique greffable ou un mélange d'un sel métallique greffable et d'un antioxydant.

Selon une première forme de l'invention, l'agent stabilisant est ajouté au polymère fluoré avant l'irradiation. Cette première forme de l'invention concerne donc un procédé de greffage par irradiation d'un composé greffable sur un polymère fluoré permettant d'éviter la déstabilisation du polymère fluoré dans lequel :
a) on mélange le polymère fluoré à l'état fondu avec un composé greffable et à un agent stabilisant ;
b) le mélange obtenu en a) est mis sous forme de films, de plaques, de granulés ou de poudre ;
c) les produits de l'étape b) sont soumis, à une irradiation photonique (γ) ou électronique (β) sous une dose comprise entre 0,5 et 15 Mrad ;
d) éventuellement on soumet les produits de l'étape c) à un lavage et/ou un dégazage.

L'agent stabilisant est un sel métallique greffable ou un mélange d'un sel métallique greffable et d'un antioxydant.

L'invention est relative aussi à un polymère fluoré sur lequel est greffé par irradiation un composé greffable et un sel métallique greffable.

Le polymère fluoré modifié par greffage sous irradiation obtenu selon l'invention ou sa variante peut être utilisé tel quel ou en mélange soit avec le même polymère fluoré mais non greffé soit avec un autre polymère fluoré soit avec un autre polymère tel que par exemple un polymère acrylique. A titre d'exemple de polymère acrylique, on peut citer un homo- ou copolymère du méthacrylate de méthyle contenant plus de 51% de méthacrylate de méthyle ainsi que les modifiants choc de type core-shell (coeur-écorce).

L'invention concerne aussi des structures comprenant au moins une couche de ce polymère fluoré modifié par greffage par irradiation et au moins une couche d'un autre matériau.

L'invention concerne aussi l'utilisation de ces structures pour obtenir un effet barrière. Ces structures sont barrière à de nombreux fluides et en particulier à l'essence et aux fluides de climatisation. Ces structures peuvent se mettre sous forme de bouteilles, réservoirs, conteneurs, tuyaux et récipients de toute sorte. Elles peuvent aussi être transformées en films avec lesquels on fait des emballages. L'utilisation conjointe d'un polymère fluoré imperméable aux fluides apolaires et d'une polyoléfine imperméable aux fluides polaires est particulièrement intéressante car elle permet d'obtenir une barrière très efficace aux essences contenant des liquides comme le M15 (iso-octane 42,5%, toluène 42,5% et méthanol 15% en volume) ou le TF1 (45% toluène, 45% iso-octane et 10% éthanol en volume).

L'invention concerne aussi des structures dans lesquelles le polymère fluoré est utilisé pour protéger des substrats.

Dans les structures précédentes, le polymère fluoré modifié par greffage par irradiation peut être utilisé seul ou en mélange comme cité plus haut.

L'invention concerne aussi le polymère fluoré modifié par greffage par irradiation dans la masse. Elle concerne le polymère fluoré modifié par greffage par irradiation dans la masse en mélange soit avec le même polymère fluoré mais non greffé soit avec un autre polymère fluoré soit avec un autre polymère tel que par exemple un polymère acrylique. A titre d'exemple de polymère acrylique on peut citer le PMMA et les modifiants choc de type core shell (coeur écorce).

### [Description détaillée de l'invention]

**S'agissant du polymère fluoré,** on désigne ainsi tout polymère ayant dans sa chaîne au moins un monomère choisi parmi les composés contenant un groupe vinyle capable de s'ouvrir pour se polymériser et qui contient, directement attaché à ce groupe vinyle, au moins un atome de fluor, un groupe fluoroalkyle ou un groupe fluoroalkoxy.

A titre d'exemple de monomère on peut citer le fluorure de vinyle; le fluorure de vinylidène (VDF); le trifluoroéthylène (VF₃); le chlorotrifluoroéthylène (CTFE); le 1,2-difluoroéthylène; le tetrafluoroéthylène (TFE); l'hexafluoropropylène (HFP); les perfluoro(alkyl vinyl) éthers tels que le perfluoro(méthyl vinyl)éther (PMVE), le perfluoro(éthyl vinyl) éther (PEVE) et le perfluoro(propyl vinyl)éther (PPVE); le perfluoro(1,3-dioxole); le perfluoro(2,2-dimethyl-1,3-dioxole) (PDD); le produit de formule CF₂=CFOCF₂CF(CF₃)OCF₂CF₂X dans laquelle X est SO₂F CO₂H, CH₂OH, CH₂OCN ou CH₂OPO₃H; le produit de formule CF₂=CFOCF₂CF₂SO₂F; le produit de formule F(CF₂)nCH₂OCF=CF₂ dans laquelle n est 1, 2, 3, 4 or 5 ; le produit de formule R₁CH₂OCF=CF₂ dans laquelle R₁ est l'hydrogène ou F(CF₂)z et z vaut 1, 2, 3 ou 4; le produit de formule R₃OCF=CH₂ dans laquelle R₃ est F(CF₂)z- et z est 1, 2, 3 or 4; le perfluorobutyl éthylène (PFBE); le 3,3,3-trifluoropropène et le 2-trifluorométhyl-3,3 3 -trifluoro-1-propène.
Le polymère fluoré peut être un homopolymère ou un copolymère, il peut aussi comprendre des monomères non fluorés tels que l'éthylène.

A titre d'exemple le polymère fluoré est choisi parmi :
- les homo- et copolymères du fluorure de vinylidène (VDF) contenant de préférence au moins 50% en poids de VDF, le copolymère étant choisi parmi le chlorotrifluoroéthylène (CTFE), l'hexafluoropropylène (HFP), le trifluoroéthylène (VF3) et le tétrafluoroéthylène (TFE),
- les homo- et copolymères du trifluoroéthylène (VF₃),
- les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VDF et/ou VF₃.

Avantageusement le polymère fluoré est du poly(fluorure de vinylidène) (PVDF) homopolymère ou copolymère. De préférence, le PVDF contient, en poids, au moins 50% de VDF, plus préférentiellement au moins 75% et mieux encore au moins 85%. Le comonomère est avantageusement l'HFP.

Avantageusement, le PVDF a une viscosité allant de 100 Pa.s à 2000 Pa.s, la viscosité étant mesurée à 230°C, à un gradient de cisaillement de 100 s⁻¹ à l'aide d'un rhéomètre capillaire. En effet, ces PVDF sont bien adaptés pour l'extrusion et pour l'injection. De préférence, le PVDF a une viscosité allant de 300 Pa.s à 1200 Pa.s, la viscosité étant mesurée à 230°C, à un gradient de cisaillement de 100 s⁻¹ à l'aide d'un rhéomètre capillaire. Ainsi, les PVDF commercialisés sous la marque KYNAR^{®} 710 ou 720 sont parfaitement adaptés pour cette formulation.

Il n'est pas exclu que le polymère fluoré présente des fonctions polaires introduites directement par copolymérisation avec un monomère adapté. Dans ce cas, à l'issue du greffage par irradiation, on aurait un polymère fluoré présentant des fonctions polaires issues à la fois de la copolymérisation et du procédé selon l'invention.

**S'agissant du composé greffable,** celui-ci possède une seule double liaison C=C ainsi qu'au moins une fonction polaire qui peut être une fonction :
- acide carboxylique,
- acide sulfonique,
- anhydride d'acide carboxylique,
- époxyde,
- ester d'acide carboxylique,
- silyle,
- amide carboxylique,
- hydroxy,
- isocyanate.
La fonction polaire n'est pas une fonction sel d'acide carboxylique.

Citons à titre d'exemples de composés greffables l'acide méthacrylique, l'acide acrylique, l'acide undécylénique, l'acide crotonique, l'acide itaconique, l'anhydride maléïque, l'anhydride dichloromaléïque, l'anhydride difluoromaléïque, l'anhydride itaconique, l'anhydride crotonique, l'acrylate ou le méthacrylate de glycidile, l'allyl glycidyl éther, les vinyles silanes tel que le vinyl triméthoxysilane, le vinyl triéthoxysilane, le vinyl triacétoxysilane, le γ-méthacryloxypropyltriméthoxysilane, le maléate de mono-éthyle, le maléate de diéthyle, le fumarate de monométhyle, le fumarate de diméthyle, l'itaconate de monométhyle et l'itaconate de diéthyle

De par la présence d'une double liaison C=C sur le composé greffable, il n'est pas exclu que le composé greffable polymérise pour donner des chaînes de polymère soit greffées sur le polymère fluoré, soit libres c'est-à-dire non-attachées au polymère fluoré. On entend par chaîne de polymère un enchaînement de plus de 10 unités du composé greffable. Dans le cadre de l'invention, afin de favoriser les propriétés d'adhésion du polymère fluoré modifié, il est préférable de limiter la présence de chaînes de polymère greffées ou libres, donc de chercher à obtenir des chaînes de moins de 10 unités du composé greffable. De préférence, on se limitera à des chaînes de moins de 5 unités de composés greffables, et de manière encore plus préférée de moins de 2 unités de composé greffable. La présence de plus d'une double liaison sur le composé greffable peut conduire à une réticulation du polymère fluoré, donc à une modification des propriétés rhéologiques voire même à la présence de gels, ce qui n'est pas souhaité. II peut alors être difficile d'obtenir un bon rendement du greffage tout en limitant la réticulation. Aussi, les composés greffables selon l'invention ne contiennent qu'une seule double liaison C=C. Les composés greffables préférés sont donc ceux possédant une seule double liaison C=C et au moins une fonction polaire.

Les anhydrides d'acide carboxylique sont préférés car ils ont peu tendance à polymériser ni même à donner lieu à une réticulation et procurent de bonnes propriétés d'adhésion. Parmi eux, l'anhydride maléïque l'est tout particulièrement.

Dans le mélange à l'issue de l'étape a), la teneur en composé greffable est de 0,1 à 10%, de préférence 0,1 à 5%, de composé greffable pour 99,9 à 90%, de préférence 99,9 à 95% de polymère fluoré.

**S'agissant de l'agent stabilisant,** celui-ci peut être :
- un sel métallique greffable,
- ou une combinaison d'un sel métallique greffable et d'un antioxydant.

Cette combinaison peut consister soit à mélanger un sel métallique greffable et un antioxydant au polymère fluoré avant l'irradiation, soit à mélanger un sel métallique greffable avant l'irradiation et un antioxydant après l'irradiation.

**S'agissant du sel métallique greffable,** celui-ci comprend une seule double liaison C=C et une fonction sel d'acide carboxylique. Il peut être représenté par l'une des formules suivantes :

(CH₂=CH-COO⁻)ₙMⁿ⁺

(CH₂=C(CH₃)-COO⁻)ₙMⁿ⁺

(CH₂=CH-Q-COO⁻)ₙMⁿ⁺

avec :
Q désignant un groupement aliphatique linéaire ou cyclique, éventuellement substitué, aromatique, éventuellement substitué,
M désignant un cation métallique de valence n pouvant être choisi parmi Ca²⁺, Na⁺, Zn²⁺.

A titre d'exemples, on peut citer les undécylénates de zinc, de calcium ou de sodium, l'acrylate de zinc, le méthacrylate de zinc, le méthacrylate de sodium. Les undécylénates de zinc, de calcium ou de sodium sont préférés.

Le cation métallique préféré est Zn²⁺. Parmi les sels métalliques greffables comportant le cation Zn²⁺, l'undécylénate de zinc est tout particulièrement préféré.

Dans le mélange à l'issue de l'étape a), la teneur en sel métallique greffable est de 0,1 à 10%, de préférence 0,1 à 5%, de sel métallique greffable pour 99,9 à 90%, de préférence 99,9 à 95% de polymère fluoré.

**S'agissant de l'antioxydant,** celui-ci peut être un antioxydant phénolique. II peut s'agir par exemple d'un monophénol alkylé tel que le 2,6-di-tert-butyl-4-methylphénol, 2,6-di-tert-butylphénol (IRGANOX^{®} 140), 2-tert-butyl-4,6-diméthylphénol, 2,6-di-tert-butyl-4-éthyl-phénol, 2,6-di-tert-butyl-4-n-butylphénol, 2,6-di-tert-butyl-4-isobutylphénol, 2,6-di-cyclopentyl-4-methylphénol, 2-(β-méthylcyclohexyl)-4,6-diméthylphénol, 2,6-di-octa-décyl-4-methylphénol, 2,4,6-tri-cyclohexylphénol, 2,6-di-tert-butyl-4-methoxymethylphénol, o-tert-butylphénol, 2,6-dinonyl-4-méthylphénol, le 2,4-diméthyl-6-(1'-méthylundécyl)phénol, 2,4-diméthyl-6-(1'-méthylheptadécyl)phénol, tetrakis-(3-(3,5-di-tert-butyl-4-hydroxyphenyl)-propionyloxymethyl)methane (IRGANOX^{®} 1010), thiodiethylene bis(3,5-di-tert-butyl-4- hydroxyhydrocinnamate (Irganox® 1035), octadecyl 3,5-di-tert-butyl-4-hydroxyhydrocinnamate (IRGANOX^{®} 1076).

II peut s'agir aussi d'une hydroquinone alkylée telle que par exemple le 2,6-di-tert-butyl-4-methoxyphénol, 2,5-di-tert-butyl-hydroquinone, 2,5-di-tert-amyl-hydroquinone, 2,6-diphenyl- 4-octa-décyloxyphénol.

Il peut s'agir aussi d'un alkylidene- bisphénol tel que par exemple le 2,2'-méthylène-bis-(6-tert-butyl-4-méthylphénoi) , 2,2'-méthylène-bis-(6-tert-butyl-4-éthylphénol), 2,2'-méthylène-bis-(4-méthyl-6-(a-methyl-cyclohexyl)-phénol), 2,2'- méthylène-bis-(4-méthyl-6-cyclohexylphénol), 2,2'-méthylène-bis-(6-nonyl-4-méthylphénol), 2,2'-méthylène-bis-(4,6-di-tert-butylphénol), 2,2'-éthylidène-bis-(4,6-di-tert-butylphénol), 2,2'-éthylidène-bis-(6-tert-butyl-4- ou -5-isobutylphénol), 2,2'-méthylène-bis-(6-(α-méthylbenzyl-4- nonylphénol), 2,2'-méthylène-bis-(6-(α,α-di-méthylbenzyl)-4-nonylphénol), 4,4'-méthylène-bis-(2,6-di-tert-butyl- phénol), 4,4'- méthylène-bis-(6-tert-butyl-2-methylphénol), 1,1-bis-(5- tert-butyl-4-hydroxy-2-methyl-phénol)-butane, 2,6-di-(3-tert-butyl-5- methyl-2-hydroxy-benzyl)-4-méthylphénol, 1,1,3-tris-(5-tert-butyl-4-hydroxy-2-méthylphényl)-3-n-dodécyl)-mercaptobutane, éthylèneglycol-bis-[3,3-bis-(3'-tert-butyl-4'-hydroxyphényl)-butyrate], bis-(3-tert-butyl-4-hydroxy-5-methylphényl)-dicyclopentadiène, bis-[2-(3'-tert-butyl-2'-hydroxy-5'-méthyl-benzyl)-6- tert-butyl-4-methyl-phényl]-téréphthalate.

Il peut s'agir aussi d'un composé benzylique tel que le 1,3,5-tri-(3,5-di-tert-butyl-4-hydroxybenzyl)-2,4,6-triméthyl-benzène, bis(3,5-di-tert-butyl-4-hydroxybenzyl)-sulfide, 3,5-di-tert-butyl-4-hydroxybenzyl-mercaptoacétique acid-isooctylester, bis-(4-tert-butyl-3-hydroxy-2,6-diméthyl-benzyl) dithioltérephthalate, 1,3,5-tris-(3,5-di-tert-butyl-4-hydroxybenzyl)-isocyanurate, 1,3,5-tris-(4-tert-butyl-3-hydroxy-2,6-diméthylbenzyl)-isocyanurate, 3,5-di-tert-butyl-4-hydroxybenzyl-phosphonic acid- dioctadécylester, 3,5-di-tert-butyl-4-hydroxybenzyl-phosphonic acid- monoéthylester.

II peut s'agir aussi d'un cylaminophénol tel que par exemple le 4-hydroxy-lauric acid anilide, 4-hydroxy-stearic acid anilide, 2,4-bis-octylmercapto-6-(3,5-di-tert-butyl-4-hydroxyanilino)-s-triazine, N-(3,5-di-tert-butyl-4-hydroxyphényl)-carbamic acid octyl ester.

L'antioxydant peut être aussi un phosphite ou phosphonite par exemple le triphényl phosphite, un diphényl alkyl phosphite, un phényl dialkyl phosphite, tris(nonylphényl) phosphite, trilauryl phosphite, trioctadécyl phosphite, distéaryl pentaérythritol diphosphite, tris(2,4-di-tert-butylphényl) phosphite, diisodécyl pentaérythritol diphosphite, bis(2,4-di-tert-butylphényl) pentaérythritol diphosphite, bis(2,6-di-tert-butyl methylphényl) pentaérythritol diphosphite, bisisodecyloxy-pentaérythritol diphosphite, bis(2,4-di-tert-butyl méthylphényl) pentaérythritol diphosphite, bis(2,4,6-tri-tert-butylphényl) pentaérythritol diphosphite, tristéaryl sorbitol triphosphite, tetrakis (2,4-di-tertbutylphényl) 4,4'-biphénylènediphosphonite, 6-isooctyloxy,10-tetra-tert-butyl-dibenzo[d, f][1,3,2]dioxaphosphepin, 6-fluoro-2,4,8,10 tetra-tert-butyl methyl- dibenzol [d,g][1,3,2] dioxaphosphocin, bis(2,4-di-tertbutyl méthylphényl) methyl phosphite, and bis(2,4-di-tert-butyl methylphényl) ethyl phosphite.

II peut également s'agir d'un composé de type nitroxyde représenté par la formule générale : 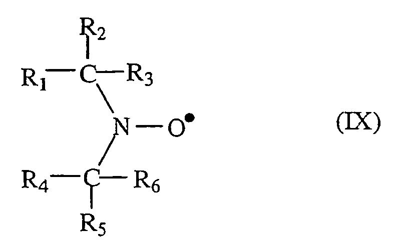 dans laquelle R₁, R₂, R₃, R₄, R₅ et R₆ désignent des groupements :
- alkyles linéaires ou branchés en C₁-C₂₀, de préférence en C₁-C₁₀ tels que méthyle, éthyle, propyle, butyle, isopropyle, isobutyle, tertiobutyle, néopentyle, substitués ou non,
- aryles en C₆-C₃₀ substitués ou non tels que benzyle, aryl(phényl) cycliques saturés en C₁-C₃₀
et dans laquelle les groupements R₁ et R₄ peuvent faire partie d'une structure cyclique R₁-CNC-R₄ éventuellement substituée pouvant être choisie parmi : 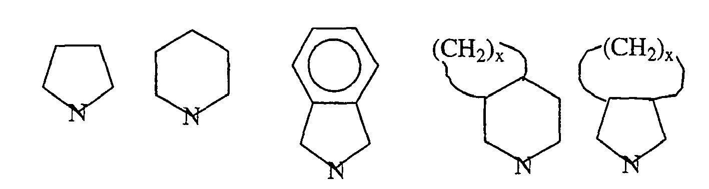 dans lesquelles x désigne un entier compris entre 1 et 12.

A titre d'exemples, on pourra utiliser les nitroxydes suivants :

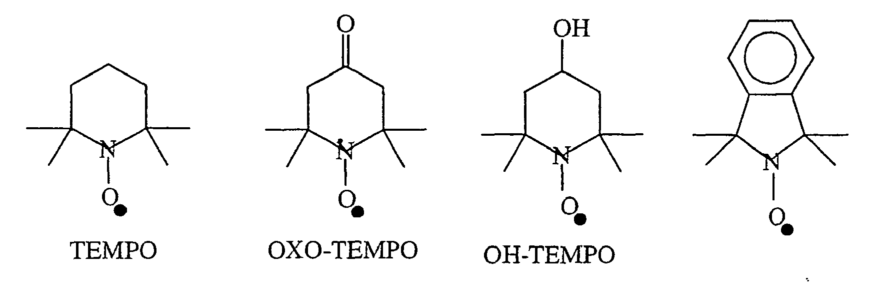

Parmi les antioxydants décrits précédemment, les monophénols alkylés sont tout particulièrement préférés, et plus particulièrement l'Irganox^{®} 1010 de la société CIBA. Il pourra s'agir aussi d'un mélange de plusieurs antioxydants choisis parmi les antioxydants décrits précédemment, par exemple un monophénol alkylé et un phosphite.

La teneur en antioxydant(s) est de 0,001 à 2%, de préférence 0,001 à 1%, pour 99,999 à 98%, de préférence 99,999 à 99%, de polymère fluoré.

**S'agissant du polymère fluoré modifié,** celui-ci conserve les bonnes propriétés de résistance chimique du polymère fluoré. Grâce au greffage par irradiation, il peut être collé ou associé à d'autres structures.

Dans le cas où l'agent stabilisant est un sel métallique greffable, on obtient donc après l'irradiation un polymère fluoré sur lequel est greffé un composé greffable et stabilisé par un sel métallique greffable. La teneur en composé greffable greffé, c'est-à-dire lié au polymère fluoré par une liaison covalente, est de 0,1 à 5%, de préférence 0,1 à 2,5%, pour 99,9 à 95,0%, de préférence 99,9 à 97,5%, de polymère fluoré. La teneur en sel métallique greffé, c'est-à-dire lié au polymère fluoré par une liaison covalente, est de 0,1 à 5%, de préférence 0,1 à 2,5%, pour 99,9 à 95,0%, de préférence 99,9 à 97,5%, de polymère fluoré.

Une combinaison des deux types d'agent stabilisant peut aussi être envisagée. La combinaison peut consister soit à mélanger un sel métallique greffable et un antioxydant au polymère fluoré avant l'irradiation, soit à mélanger un sel métallique greffable avant l'irradiation et un antioxydant après l'irradiation. On obtient donc après l'irradiation un polymère fluoré sur lequel est greffé un composé greffable et stabilisé par un sel métallique greffable et par antioxydant(s). La teneur en composé greffable greffé, c'est-à-dire lié au polymère fluoré par une liaison covalente, est de 0,1 à 5%, de préférence 0,1 à 2,5%, pour 99,9 à 95,0%, de préférence 99,9 à 97,5%, de polymère fluoré. La teneur en sel métallique greffé, c'est-à-dire lié au polymère fluoré par une liaison covalente, est de 0,1 à 5%, de préférence 0,1 à 2,5%, pour 99,9 à 95,0%, de préférence 99,9 à 97,5%, de polymère fluoré. La teneur en antioxydant est de 0,001 à 2%, de préférence 0,001 à 1%, pour 99,999 à 98%, de préférence 99,999 à 99%, de polymère fluoré.

De façon préférée, le polymère fluoré modifié est un polymère fluoré sur lequel est greffé de l'anhydride maléïque et un sel métallique greffable. De façon encore plus avantageuse, il s'agit d'un polymère fluoré sur lequel est greffé de l'anhydride maléïque et de l'undécylénate de zinc.

**S'agissant du greffage proprement dit,** celui-ci s'effectue en plusieurs étapes.

Selon une première forme de l'invention, l'agent stabilisant est ajouté au polymère fluoré avant l'irradiation. Cette première forme de l'invention concerne donc un procédé de greffage par irradiation d'un composé greffable sur un polymère fluoré permettant d'éviter la déstabilisation du polymère fluoré dans lequel :
a) on mélange le polymère fluoré à l'état fondu avec un composé greffable et à un agent stabilisant ;
b) le mélange obtenu en a) est mis sous forme de films, de plaques, de granulés ou de poudre ;
c) les produits de l'étape b) sont soumis, à une irradiation photonique (γ) ou électronique (β) sous une dose comprise entre 0,5 et 15 Mrad ;
d) éventuellement on soumet les produits de l'étape c) à un lavage et/ou un dégazage.

L'agent stabilisant est un sel métallique greffable ou un mélange d'un sel mètallique greffable et d'une antioxydant.

Selon l'une ou l'autre forme de l'invention, l'étape a) s'effectue dans tout dispositif de mélange tel que des extrudeuses ou des malaxeurs utilisés dans l'industrie des thermoplastiques. A l'issue de l'étape a), il est possible que certains des composés les plus volatils soient entraînés dans l'extrudeuse ou le mélangeur (l'entraînement de ces composés pouvant aller jusqu'à 50% en poids de la quantité initiale introduite) et soient récupérés dans les circuits d'évents.

S'agissant de l'étape c), les produits récupérés à l'issue de l'étape b) sont avantageusement conditionnés en sacs de polyéthylène et l'air est chassé puis ils sont fermés. Quant à la méthode d'irradiation, on pourra utiliser sans distinction l'irradiation électronique plus connue sous la dénomination irradiation béta et l'irradiation photonique plus connue sous la dénomination irradiation gamma. Avantageusement, la dose est comprise entre 0,5 et 6 Mrad et de préférence entre 0,5 et 3 Mrad. Le greffage à l'aide d'une bombe au cobalt est tout particulièrement préféré. Le greffage est réalisé dans la masse du polymère et non à sa surface. L'un des avantages du greffage par irradiation est de pouvoir obtenir des teneurs en composé greffable greffé plus élevées qu'avec les procédés de greffage classiques utilisant un amorceur radicalaire. Ainsi, typiquement, avec le procédé de greffage par irradiation, il est possible, si cela est désiré, d'obtenir des teneurs supérieures à 1% (1 part de composé greffable pour 99 parts du polymère fluoré), voire même supérieure à 1,5%, alors qu'avec un procédé de greffage classique en extrudeuse, la teneur est de l'ordre de 0,1 à 0,4%. Un autre avantage du greffage par irradiation est qu'il est réalisé à « froid », typiquement à des températures inférieures à 100°C, voire 70°C, de sorte que le mélange du polymère fluoré et du composé greffable n'est pas à l'état fondu comme pour un procédé de greffage classique en extrudeuse. Une différence essentielle est donc que, dans le cas d'un polymère fluoré semi-cristallin (comme pour le PVDF par exemple), le greffage a lieu dans la phase amorphe et non dans la phase cristalline alors qu'il se produit un greffage homogène dans le cas d'un greffage en extrudeuse. Le composé greffable ne se répartit donc pas identiquement sur les chaînes du polymère fluoré dans le cas du greffage par irradiation et dans le cas du greffage en extrudeuse. Le produit fluoré modifié présente donc une répartition différente du composé greffable sur les chaînes du polymère fluoré par rapport à un produit qui serait obtenu par un greffage en extrudeuse.

Pendant cette étape d'irradiation, il se forme une quantité plus ou moins importante de HF laquelle joue un rôle dans la déstabilisation du polymère fluoré, sans doute de façon similaire à ce qui se passe avec le PVC. Sans être tenue à aucune explication du rôle exact du sel métallique greffable qui peut être utilisé comme agent stabilisant, la Demanderesse envisage que le HF est susceptible d'interagir avec le sel métallique greffable pour donner le fluorure métallique et l'acide carboxylique correspondants. Par exemple, en présence d'undécylénate de zinc, on pourra avoir une réaction du type :
undécylénate de zinc greffé + HF → acide undécylénique gréffé + ZnF₂

Cette réaction n'est pas complète de sorte qu'il reste toujours du sel métallique greffable lié au polymère fluoré. De plus, la présence d'acide undécylénique greffé obtenu par la réaction avec HF peut renforcer les propriétés d'adhésion du polymère fluoré.

Les produits issus de l'étape c) (1^{ère} forme de l'invention) ou de l'étape d) (autre forme de l'invention) peuvent être éventuellement lavés et/ou dégazés. On peut laver avec des solvants du type chlorobenzène ou encore à l'acétone.

On peut aussi plus simplement dégazer sous vide, éventuellement en chauffant.

**Le polymère fluoré modifié peut être utilisé dans plusieurs types de structures en étant collé ou associé à d'autres matériaux.**
A titre d'exemple de structures selon l'invention, on peut citer celle comprenant successivement une couche intérieure en contact avec le fluide à transporter ou à stocker constituée du polymère fluoré modifié par greffage par irradiation selon l'invention et directement attachée à celle-ci une couche extérieure de polyoléfine. La polyoléfine peut être du polyéthylène ou un copolymère de l'éthylène et d'une alpha-oléfine, du polypropylène ou un copolymère du propylène et d'une alpha-oléfine. La polyoléfine préférée est le polyéthylène ou un copolymère de l'éthylène et d'une alpha-oléfine. Cette structure est utile pour des réservoirs d'essence pour les automobiles.

Selon une variante, cette structure comprend une couche de polymère fluoré, de préférence du PVDF, disposée du coté du polymère fluoré modifié par greffage par irradiation. C'est-à-dire que la structure comprend successivement une couche de polymère fluoré, de préférence du PVDF, une couche constituée du polymère fluoré modifié par greffage par irradiation selon l'invention et directement attachée à celle-ci une couche extérieure de polyoléfine telle que définie précédemment. La couche de polymère fluoré modifié par greffage par irradiation est une couche de liant entre la couche de PVDF et la couche de polyoléfine.

Dans les structures précédentes on peut disposer entre la couche de polymère fluoré modifié par greffage par irradiation et la couche de polyoléfine une couche de polyoléfine fonctionnalisée ayant des fonctions capables de réagir avec les fonctions greffées sur le polymère fluoré. Par exemple, si on a greffé de l'anhydride maléïque sur le polymère fluoré la couche de polyoléfine fonctionnalisée peut par exemple être un copolymère de l'éthylène, de méthacrylate de glycidyle et éventuellement d'acrylate d'alkyle éventuellement en mélange avec du polyéthylène.

Dans les structures précédentes, la couche intérieure en contact avec le fluide à transporter ou à stocker peut contenir du noir de carbone, des nanotubes de carbone ou tout autre additif capable de la rendre conductrice pour éviter l'accumulation d'électricité statique.

A titre d'exemple de structures selon l'invention on peut citer aussi celle comprenant successivement une couche constituée du polymère fluoré modifié par greffage par irradiation selon l'invention disposée entre 2 couches de polyoléfine telle que définie précédemment. Cette structure est utile pour des réservoirs d'essence pour les automobiles. Dans les structures précédentes, on peut disposer entre la couche de polymère fluoré modifié par greffage par irradiation et l'une ou les 2 couches de polyoléfine une couche de polyoléfine fonctionnalisée ayant des fonctions capables de réagir avec les fonctions greffées sur le polymère fluoré. Par exemple si on a greffé de l'anhydride maléïque sur le polymère fluoré la couche de polyoléfine fonctionnalisée est par exemple un copolymère de l'éthylène, du méthacrylate de glycidyle et éventuellement d'un acrylate d'alkyle éventuellement en mélange avec du polyéthylène.

A titre d'autre exemple de structures selon l'invention, on peut citer celle comprenant successivement une couche intérieure en contact avec le fluide à transporter ou a stocker constituée du polymère fluoré modifié par greffage par irradiation selon l'invention et directement attachée à celle-ci une couche extérieure de polyamide. Cette structure est utile pour des tuyaux d'essence pour les automobiles. Selon une variante, cette structure comprend une couche de polymère fluoré, de préférence du PVDF, disposée du coté du polymère fluoré modifié par greffage par irradiation. C'est-à-dire que la structure comprend successivement une couche de polymère fluoré, de préférence du PVDF, une couche constituée du polymère fluoré modifié par greffage par irradiation selon l'invention et directement attachée à celle ci une couche extérieure de polyamide. La couche de polymère fluoré modifié par greffage par irradiation est une couche de liant entre la couche de PVDF et la couche de polyamide. Dans les structures précédentes on peut disposer entre la couche de polymère fluoré modifié par greffage par irradiation et la couche de polyamide une couche de polymère fonctionnalisé ayant des fonctions capables de réagir avec les fonctions greffées sur le polymère fluoré ce polymère fonctionnalisé étant compatible avec le polyamide.

Dans les structures précédentes la couche intérieure en contact avec le fluide à transporter ou à stocker peut contenir du noir de carbone, des nanotubes de carbone ou tout autre additif capable de la rendre conductrice pour éviter l'accumulation d'électricité statique.

A titre d'autre exemple de structures selon l'invention, on peut citer celle comprenant successivement une couche extérieure du polymère fluoré modifié par greffage par irradiation de l'invention et directement attachée à celle-ci une couche d'un substrat. La couche de polymère fluoré modifié par greffage par irradiation est utilisée comme couche de protection du substrat. Le substrat peut être un élément de la carrosserie d'une automobile ou un élément d'architecture. Selon une variante cette structure comprend une couche de polymère fluoré, de préférence du PVDF, disposée du coté du polymère fluoré modifié par greffage par irradiation. C'est-à-dire que la structure comprend successivement une couche de polymère fluoré, de préférence du PVDF, une couche constituée du polymère fluoré modifié par greffage par irradiation selon l'invention et directement attachée à celle-ci la une couche d'un substrat. La couche de polymère fluoré modifié par greffage par irradiation est une couche de liant entre la couche de PVDF et la couche de substrat. Dans les structures précédentes on peut disposer entre la couche de polymère fluoré modifié par greffage par irradiation et la couche de substrat une couche de polymère fonctionnalisé ayant des fonctions capables de réagir avec les fonctions greffées sur le polymère fluoré ce polymère étant compatible avec le substrat.

Le polymère fluoré modifié peut aussi être utilisé en tant que revêtement anticorrosion d'une surface métallique, laquelle aura été éventuellement au préalable recouverte d'un primaire d'adhésion.

Le polymère fluoré modifié par greffage par irradiation ou le PVDF utilisé en couche de protection d'un substrat peut contenir les additifs habituels anti-UV et/ou les charges absorbantes de rayonnement.

Ces structures peuvent être fabriquées par les techniques habituelles telles que l'extrusion, la coextrusion, la coextrusion soufflage, l'enduction, l'extrusion couchage.

### [Exemples]

On a utilisé le polymère fluoré suivant :
**Kynar^{®} 720 :** PVDF homopolymère de la société ATOFINA et de MVI (Melt Volume Index ou indice de fluidité en volume à l'état fondu) 10 cm³/10 min (230°C, 5kg).

### Exemple 1 : selon l'invention

Un mélange à base de 97% de KYNAR^{®} 720, de 1% d'undécylénate de zinc et de 2% d'anhydride maléïque est préparé à l'état fondu à 210°C, à un débit de 100 kg/heure sur une extrudeuse Werner 58 tournant à 200 tours/minute. Le mélange ainsi préparé est ensuite introduit dans un sac, l'air est chassé à l'aide d'un balayage d'argon, puis irradié par une source de cobalt 60 sous une dose de 30 kgray à un débit de dose de 1,6 kgray/heure. Après cette étape d'irradiation, la quantité d'HF présente dans l'atmosphère du sac est mesurée à 0,5 ppm. Après cette étape d'irradiation le produit est dégazé à 240°C à 100 kg/heure de débit sur l'extrudeuse Werner 58 tournant à 400 tours/minute en incorporant lors de ce dégazage sous 50 mbar, 0,5% d'IRGANOX^{®} 1010 de la société CIBA. Le produit après cette étape de dégazage présente une couleur beige très peu prononcée. On obtient ainsi un PVDF sur lequel a été greffé 1 % d'anhydride maléïque et 0,5% d'undécylénate de zinc et contenant 0,5% d'IRGANOX^{®} 1010.

Le produit obtenu est ensuite coextrudé sur une extrudeuse McNeil pour produire un tube 29/32. Le tube présente l'ordre des couches suivant de l'extérieur vers l'intérieur :
- une couche de Polyéthylène HD de densité = 0,94 (2,6 mm) ;
- une couche de LOTADER^{®} AX 8840 (0,1 mm) de la société ARKEMA;
- une couche du produit selon invention (0,3 mm).

L'adhésion obtenue est de l'ordre de 45N/cm juste après l'extrusion et de plus de 100 N/cm après 2 jours. La perméabilité du tube au mélange isooctane 42,5%, toluène 42,5% et 15% de méthanol à 40°C est de l'ordre de 1 gr/m².jour après 180 jours de test et lorsque l'équilibre de perméation est obtenu. Le tube obtenu présente une couleur blanche laiteuse.

### Exemple 2 : comparatif

Un mélange à base de 98% de KYNAR^{®} 720, et de 2% d'anhydride maléïque est préparé à l'état fondu à 210°C, à 100 kg/heure de débit sur une extrudeuse Werner 58 tournant à 200 tours/minute. Le mélange ainsi préparé est ensuite introduit dans un sac et irradié par une source de cobalt 60 sous une dose de 30 kgray à un débit de dose de 1,6 kgray/heure. Après cette étape d'irradiation la quantité d'HF mesurée dans l'atmosphère du sac est de 110 ppm. Après cette étape d'irradiation le produit est dégazé sous 50 mbar à 240°C à 100 kg/heure de débit sur une Werner 58 à 400 tours/minute. Le produit après cette étape de dégazage présente une couleur marron foncé. On obtient ainsi un PVDF sur lequel a été greffé 1 % d'anhydride maléïque.

Le produit obtenu est ensuite coextrudé sur une extrudeuse McNeil pour produire un tube 29/32 en suivant l'ordre des couches suivant :
- une couche de Polyéthylène HD de densité = 0,94 (2,6 mm) ;
- une couche de LOTADER^{®} AX 8840 (0,1 mm) de la société ARKEMA;
- une couche du matériau préparé (0,3 mm).

L'adhésion obtenue est de l'ordre de 46N/cm juste après l'extrusion et de plus de 98 N/cm après 2 jours. La perméabilité au mélange isooctane 42,5%, toluène 42,5% et 15% de méthanol à 40°C du tube obtenu est de l'ordre de 1,2 gr/m².jour après 180 jours de test et lorsque l'équilibre de perméation est obtenu. Le tube obtenu présente une couleur marron.

## Revendications

1. Procédé de greffage par irradiation d'un composé greffable sur un polymère fluoré permettant d'éviter la déstabilisation du polymère fluoré comprenant les étapes suivantes :
a) on mélange le polymère fluoré à l'état fondu avec un composé greffable contenant une seule double liaison C=C ;
b) le mélange obtenu en a) est mis sous forme de films, de plaques, de granulés ou de poudre ;
c) les produits de l'étape b) sont soumis, à une irradiation photonique (γ) ou électronique (β) sous une dose comprise entre 0,5 et 15 Mrad ;
d) éventuellement on soumet les produits de l'étape c) à un lavage et/ou un dégazage ;
et dans lequel un agent stabilisant est mélangé au polymère fluoré, l'agent stabilisant étant un sel métallique greffable ou une mélange d'un sel métallique greffable et d'un antioxydant.

2. Procédé selon la revendication 1 dans lequel l'agent stabilisant est mélangé au polymère fluoré avant l'irradiation.

3. Procédé selon l'une des revendications 1 à 2 dans lequel le sel métallique greffable est représenté par l'une des formules suivantes :
(CH₂=CH-COO⁻)ₙMⁿ⁺
(CH₂C(CH₃)-COO⁻)ₙMⁿ⁺
(CH₂=CH-Q-COO⁻)ₙMⁿ⁺
avec :
Q désignant un groupement aliphatique linéaire ou cyclique, éventuellement substitué, aromatique, éventuellement substitué,
M désignant un cation métallique de valence n pouvant être choisi parmi Ca²⁺, Na⁺, Zn²⁺.

4. Procédé selon la revendication 3 dans lequel le sel métallique greffable est l'undécylénate de zinc.

5. Procédé selon l'une des revendications 2 à 4, dans lequel la teneur en sel métallique greffable à l'issue de l'étape a) est de 0,1 à 10%, de préférence 0,1 à 5%, de sel métallique greffable pour 99,9 à 90%, de préférence 99,9 à 95% de polymère fluoré.

6. Procédé selon les revendications 1 à 5 dans lequel l'antioxydant est un monophénol alkylé, une hydroquinone alkylée, un alkylidène bisphénol, composé benzylique, un cylaminophénol, un phosphite, un phosphonite ou un nitroxyde de formule générale : 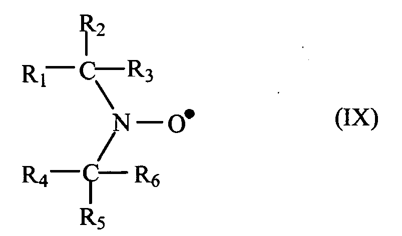 dans laquelle R₁, R₂, R₃, R₄, R₅ et R₆ désignent des groupements :
- alkyles linéaires ou branchés en C₁-C₂₀, de préférence en C₁-C₁₀ tels que méthyle, éthyle, propyle, butyle, isopropyle, isobutyle, tertiobutyle, néopentyle, substitués ou non,
- aryles en C₆-C₃₀ substitués ou non tels que benzyle, aryl(phényl) cycliques saturés en C₁-C₃₀
et dans laquelle les groupements R₁ et R₄ peuvent faire partie d'une structure cyclique R₁-CNC-R₄ éventuellement substituée pouvant être choisie parmi : 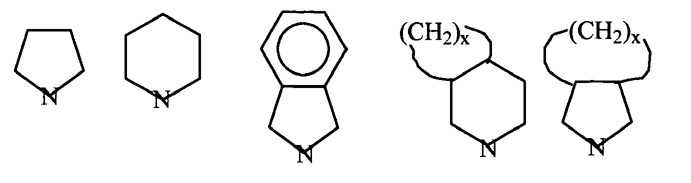 dans lesquelles x désigne un entier compris entre 1 et 12.

7. Procédé selon la revendication 6 dans lequel l'antioxydant est le 2,6-di-tert-butyl-4-méthylphénol, 2,6- di-tert-butylphénol (IRGANOX® 140), 2-tert-butyl-4,6-diméthylphénol, 2,6-di-tert-butyl-4-éthyl-phénol, 2,6-di-tert-butyl-4-n-butylphénol, 2,6- di-tert-butyl-4-isobutylphénol, 2,6-di-cyclopentyl-4-méthylphénol, 2- (β-méthylcydohexyl)-4,6-dimethylphénol, 2,6-di-octa-decyl-4-methylphénol, 2,4,6-tri-cyclohexylphénol, 2,6-di-tert-butyl-4-methoxyméthylphénol, O- tert-butylphénol, 2,6-dinonyl-4-méthylphénol, le 2,4-diméthyl-6-(1'-méthylundécyl)phénol, 2,4-diméthyl-6-(1'-méthylheptadécyl)phénol, tetrakis-(3-(3,5-di-tert-butyl-4-hydroxyphenyl)-propionyloxyméthyl)méthane (IRGANOX® 1010), thiodiéthylène bis(3,5-di-tert-butyl-4-hydroxyhydrocinnamate (IRGANOX® 1035), octadécyl 3,5-di-tert-butyl-4-hydroxyhydrocinnamate (IRGANOX® 1076).

8. Procédé selon l'une des revendications 1 à 7 dans lequel la teneur en antioxydant est de 0,001 à 2%, de préférence 0,001 à 1 %, pour 99,999 à 98%, de préférence 99,999 à 99%, de polymère fluoré.

9. Procédé selon l'une quelconque des revendications précédentes dans lequel le polymère fluoré est le PVDF.

10. Procédé selon la revendication 9 dans lequel le PVDF contient au moins 85% en poids de VDF.

11. Structure comprenant au moins une couche du polymère fluoré modifié par greffage par irradiation, préparé selon le procédé de l'une quelconque des revendications précédentes, et au moins une couche d'un autre matériau.

12. Bouteilles, réservoirs, conteneurs, tuyaux, récipients, films et emballages fabriqués avec une structure de la revendication 11.

13. Structure comprenant une couche intérieure en contact avec le fluide à transporter ou à stocker, constituée du polymère fluoré modifié par greffage par irradiation, fabriqué selon l'une quelconque des revendications 1 à 10, et directement attachée à celle-ci une couche extérieure de polyoléfine.

14. Structure selon la revendication 13 dans laquelle une couche de PVDF est disposée du côté de la couche de polymère fluoré modifié par greffage par irradiation.

15. Structure selon la revendication 13 ou 14 dans laquelle on dispose entre la couche de polymère fluoré modifié par greffage par irradiation et la couche de polyoléfine une couche de polyoléfine fonctionnalisée ayant des fonctions capables de réagir avec les fonctions greffées sur le polymère fluoré.

16. Structure comprenant une couche constituée du polymère fluoré modifié par greffage par irradiation fabriqué selon l'une quelconque des revendications 1 à 10 disposée entre 2 couches de polyoléfine.

17. Structure selon la revendication 16 dans laquelle on dispose entre la couche de polymère fluoré modifié par greffage par irradiation et l'une ou les 2 couches de polyoléfine une couche de polyoléfine fonctionnalisée ayant des fonctions capables de réagir avec les fonctions greffées sur le polymère fluoré.

18. Structure comprenant une couche intérieure en contact avec le fluide à transporter ou a stocker, constituée du polymère fluoré modifié par greffage par irradiation, fabriqué selon l'une quelconque des revendications 1 à 10, et directement attachée à celle-ci une couche extérieure de polyamide.

19. Structure selon la revendication 18 dans laquelle une couche de PVDF est disposée du coté de la couche de polymère fluoré modifié par greffage par irradiation.

20. Structure selon la revendication 18 ou 19 dans laquelle on dispose entre la couche de polymère fluoré modifié par greffage par irradiation et la couche de polyamide une couche de polymère fonctionnalisé ayant des fonctions capables de réagir avec les fonctions greffées sur le polymère fluoré, ce polymère fonctionnalisé étant compatible avec le polyamide.

21. Structure selon l'une quelconque des revendications 13 à 20 dans laquelle la couche intérieure en contact avec le fluide à transporter ou à stocker peut contenir du noir de carbone, des nanotubes de carbone ou tout autre additif capable de la rendre conductrice pour éviter l'accumulation d'électricité statique.

22. Structure comprenant une couche extérieure constituée du polymère fluoré modifié par greffage par irradiation fabriqué selon l'une quelconque des revendications 1 à 10 et directement attachée à celle-ci une couche d'un substrat.

23. Structure selon la revendication 18 dans laquelle une couche de PVDF est disposée du coté de la couche de polymère fluoré modifié par greffage par irradiation.

24. Structure selon la revendication 22 ou 23 dans laquelle on dispose entre la couche de polymère fluoré modifié par greffage par irradiation et la couche de substrat une couche de polymère fonctionnalisé ayant des fonctions capables de réagir avec les fonctions greffées sur le polymère fluoré, ce polymère fonctionnalisé étant compatible avec le substrat.

25. Polymère fluoré modifié, obtenu par greffage par irradiation d'un composé greffable contenant une seule double liaison C=C et d'un polymère fluoré et stabilisé par un sel métallique greffable, seul ou en mélange avec un antioxydant

26. Polymère fluoré modifié selon la revendication 25 dans lequel la teneur en composé greffable greffé, c'est-à-dire lié au polymère fluoré par une liaison covalente, est de 0,1 à 5%, de préférence 0,1 à 2,5%, pour 99,9 à 95,0%, de préférence 99,9 à 97,5%, de polymère fluoré.

27. Polymère fluoré modifié selon l'une des revendications 25 à 26 dans lequel la teneur en sel métallique greffé, c'est-à-dire lié au polymère fluoré par une liaison covalente, est de 0,1 à 5%, de préférence 0,1 à 2,5%, pour 99,9 à 95,0%, de préférence 99,9 à 97,5%, de polymère fluoré.

28. Polymère fluoré modifié selon l'une des revendication 25 à 27 dans lequel la teneur en antioxydant est de 0,001 à 2%, de préférence 0,001 à 1 %, pour 99,999 à 98%, de préférence 99,999 à 99%, de polymère fluoré.

29. Polymère fluoré modifié selon l'une des revendications 25 à 28 dans lequel le sel métallique greffable est choisi parmi l'undécylénate de zinc, l'undécylénate de calcium et l'undécylénate de sodium.

30. Polymère fluoré modifié selon l'une des revendications 25 à 29 dans lequel le polymère fluoré est le PVDF.

31. Polymère fluoré selon la revendication 30 dans lequel le PVDF contient au moins 85% en poids de VDF.

## Claims

1. Method for the radiation grafting of a compound that can be grafted onto a fluoropolymer, so as to prevent destabilization of the fluoropolymer, comprising the following steps:
a) the fluoropolymer is melt-blended with a graftable compound containing a single C=C double bond;
b) the blend obtained at a) is formed into films, sheets, granules or powder;
c) the products from step b) are subjected to photon (γ) or electron (β) irradiation with a dose of between 0.5 and 15 Mrad; and
d) optionally, the products from step c) are subjected to a washing and/or a degassing operation, and in which a stabilizer is blended into the fluoropolymer, the stabilizer being a graftable metal salt or a mixture of a graftable metal salt and an antioxidant.

2. Method according to Claim 1, in which the stabilizer is blended into the fluoropolymer before the irradiation.

3. Method according to either of Claims 1 and 2, in which the graftable metal salt is represented by one of the following formulae:
(CH₂=CH-COO⁻)ₙMⁿ⁺
(CH₂=C(CH₃)-COO⁻)ₙMⁿ⁺
(CH₂=CH-Q-COO⁻)ₙMⁿ⁺
where Q denotes an optionally substituted, linear or cyclic, aliphatic or optionally substituted aromatic group and M denotes a metal cation of valence n, which may be chosen from Ca²⁺, Na⁺ and Zn²⁺.

4. Method according to Claim 3, in which the graftable metal salt is zinc undecylenate.

5. Method according to one of Claims 2 to 4, in which the content of graftable metal salt after step a) is 0.1 to 10%, preferably 0.1 to 5%, of graftable metal salt per 99.9 to 90%, preferably 99.9 to 95%, of fluoropolymer.

6. Method according to Claims 1 to 5, in which the antioxidant is an alkylated monophenol, an alkylated hydroquinone, an alkylidene bisphenol, a benzyl compound, an acylaminophenol, a phosphite, a phosphonite or a nitroxide of general formula: 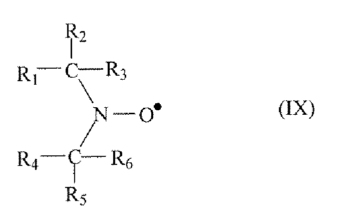 in which R₁, R₂, R₃, R₄, R₅ and R₆ denote:
- C₁-C₂₀, preferably C₁-C₁₀, linear or branched alkyl groups, such as methyl, ethyl, propyl, butyl, isopropyl, isobutyl, *tert*-butyl, neopentyl, whether substituted or not;
- C₆-C₃₀ aryl groups, whether substituted or not, such as benzyl or C₁-C₃₀ saturated cyclic aryl(phenyl) groups,
and in which the R₁ and R₄ groups may form part of an R₁-CNC-R₄ cyclic structure optionally substituted, possibly chosen from: 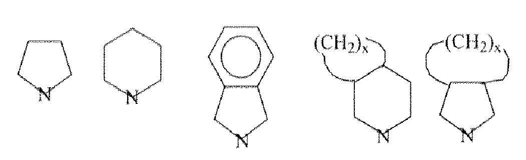 in which x denotes an integer between 1 and 12.

7. Method according to Claim 6, in which the antioxidant is 2,6-di-*tert*-butyl-4-methylphenol, 2,6-di-*tert*-butylphenol (IRGANOX® 140), 2-*tert*-butyl-4,6-dimethylphenol, 2,6-di-*tert*-butyl-4-ethylphenol, 2,6-di-*tert*-butyl-4-n-butylphenol, 2,6-di-tert-butyl-4-isobutylphenol, 2,6-di-CyClopentyl-4-methylphenol, 2-(β-methylcyclohexyl)-4,6-dimethylphenol, 2,6-di-octadecyl-4-methylphenol, 2,4,6-tri-cyclohexylphenol, 2,6-di-tert-butyl-4-methoxymethylphenol, o-tert-butylphenol, 2,6-dinonyl-4-methylphenol, 2,4-dimethyl-6-(1'-methylundecyl)phenol, 2,4-dimethyl-6-(1'-methylheptadecyl) phenol, tetrakis(3-(3,5-di-tert-butyl-4-hydroxyphenyl)propionyloxymethyl)methane (IRGANOX® 1010), thiodiethylene bis(3,5-di-tert-butyl-4-hydroxyhydrocinnamate) (IRGANOX® 1035), octadecyl-3,5-di-tert-butyl-4-hydroxyhydrocinnamate (IRGANOX® 1076).

8. Method according to one of Claims 1 to 7, in which the antioxidant content is 0.001 to 2%, preferably 0.001 to 1%, per 99.999 to 98%, preferably 99.999 to 99%, of fluoropolymer.

9. Method according to any one of the preceding claims, in which the fluoropolymer is PVDF.

10. Method according to Claim 9, in which the PVDF contains at least 85% VDF by weight.

11. Structure comprising at least one layer of the fluoropolymer modified by radiation grafting prepared according to the method of any one of the preceding claims and at least one layer of another material.

12. Bottles, tanks, containers, pipes, hoses, receptacles, films and packaging produced with a structure of Claim 14.

13. Structure comprising an inner layer in contact with the fluid to be transported or stored, consisting of the fluoropolymer modified by radiation grafting produced according to any one of Claims 1 to 10 and, directly attached thereto, a polyolefin outer layer.

14. Structure according to Claim 13, in which a PVDF layer is placed beside the layer of fluoropolymer modified by radiation grafting.

15. Structure according to Claim 13 or 14, in which a functionalized polyolefin layer is placed between the layer of fluoropolymer modified by radiation grafting and the polyolefin layer, said functionalized polyolefin having functional groups capable of reacting with the functional groups grafted onto the fluoropolymer.

16. Structure comprising a layer consisting of the fluoropolymer modified by radiation grafting produced according to any one of Claims 1 to 10 and placed between two polyolefin layers.

17. Structure according to Claim 16, in which a functionalized polyolefin layer is placed between the layer of fluoropolymer modified by radiation grafting and one or both of the polyolefin layers, said functionalized polyolefin having functional groups capable of reacting with the functional groups grafted onto the fluoropolymer.

18. Structure comprising an inner layer in contact with the fluid to be transported or stored, consisting of the fluoropolymer modified by radiation grafting produced according to any one of Claims 1 to 10 and, directly attached thereto, a polyamide outer layer.

19. Structure according to Claim 18, in which a PVDF layer is placed beside the layer of fluoropolymer modified by radiation grafting.

20. Structure according to Claim 18 or 19, in which a functionalized polymer layer is placed between the layer of fluoropolymer modified by radiation grafting and the polyamide layer, said functionalized polymer having functional groups capable of reacting with the functional groups grafted onto the fluoropolymer, this functionalized polymer being compatible with the polyamide.

21. Structure according to any one of Claims 13 to 20, in which the inner layer in contact with the fluid to be transported or stored may contain carbon black, carbon nanotubes or any other additive capable of making the structure conducting in order to prevent the build-up of static electricity.

22. Structure comprising an outer layer consisting of the fluoropolymer modified by radiation grafting produced according to any one of Claims 1 to 10 and, directly attached thereto, a layer of a substrate.

23. Structure according to Claim 18, in which a PVDF layer is placed beside the layer of fluoropolymer modified by radiation grafting.

24. Structure according to Claim 22 or 23, in which a functionalized polymer layer is placed between the layer of fluoropolymer modified by radiation grafting and the substrate layer, said functionalized polymer having functional groups capable of reacting with the functional groups grafted onto the fluoropolymer, this functionalized fluoropolymer being compatible with the substrate.

25. Modified fluoropolymer, obtained by radiation grafting of a graftable compound containing a single C=C double bond and of a fluoropolymer stabilized by a graftable metal salt, alone or as a mixture with an antioxidant.

26. Modified fluoropolymer according to Claim 25, in which the content of graftable compound grafted, that is to say linked to the fluoropolymer via a covalent bond, is 0.1 to 5%, preferably 0.1 to 2.5%, per 99.9 to 95.0%, preferably 99.9 to 97.5%, of fluoropolymer.

27. Modified fluoropolymer according to either of Claims 25 and 26, in which the content of grafted metal salt, that is to say that links to the fluoropolymer via a covalent bond, is 0.1 to 5%, preferably 0.1 to 2.5%, per 99.9 to 95.0%, preferably 99.9 to 97.5%, of fluoropolymer.

28. Modified fluoropolymer according to any one of Claims 25 to 27, in which the antioxidant content is 0.001 to 2%, preferably 0.001 to 1%, per 99.999 to 98%, preferably 99.999 to 99%, of fluoropolymer.

29. Modified fluoropolymer according to one of Claims 25 to 28, in which the graftable metal salt is chosen from zinc undecylenate, calcium undecylenate and sodium undecylenate.

30. Modified fluoropolymer according to one of Claims 25 to 29, in which the fluoropolymer is PVDF.

31. Fluoropolymer according to Claim 30, in which the PVDF contains at least 85% PDF by weight.

## Patentansprüche

1. Verfahren zum Pfropfen durch Bestrahlung einer pfropfbaren Verbindung auf ein Fluorpolymer, das es ermöglicht, die Destabilisierung des Fluorpolymers zu vermeiden, wobei das Verfahren die folgenden Schritte aufweist:
a) das Mischen des Fluorpolymers im geschmolzenen Zustand mit einer pfropfbaren Verbindung, die eine einzige Doppelbindung C=C enthält;
b) das Formen des in Schritt a) erhaltenen Gemischs zu Filmen, Plättchen, Körnern oder Pulver;
c) das Aussetzen der Produkte aus Schritt b) einer Bestrahlung mittels Photonen (γ) oder Elektronen (β) mit einer Dosis zwischen 0,5 und 15 Mrad;
d) gegebenenfalls das Unterziehen der Produkte aus Schritt c) einer Waschung und/oder Entgasung;
und wobei ein Stabilisierungsmittel dem Fluorpolymer zugemischt wird, wobei das Stabilisierungsmittel ein pfropfbares Metallsalz oder ein Gemisch aus einem pfropfbaren Metallsalz und einem Antioxidans ist.

2. Verfahren nach Anspruch 1, wobei das Stabilisierungsmittel dem Fluorpolymer vor der Bestrahlung zugemischt wird.

3. Verfahren nach einem der Ansprüche 1 oder 2, wobei das pfropfbare Metallsalz durch eine der folgenden Formeln dargestellt ist:
(CH₂=CH-COO⁻)ₙMⁿ⁺
(CH₂=C(CH₃)-COO⁻)ₙMⁿ⁺
(CH₂=CH-Q-COO⁻)ₙMⁿ⁺
worin:
Q für eine gegebenenfalls substituierte geradkettige oder zyklische aliphatische Gruppe oder eine gegebenenfalls substituierte aromatische Gruppe steht und M für ein metallisches Kation mit der Valenz n steht, das aus Ca²⁺, Na⁺ und Zn²⁺ ausgewählt sein kann.

4. Verfahren nach Anspruch 3, wobei das pfropfbare Metallsalz ein Zinkundecylenat ist.

5. Verfahren nach einem der Ansprüche 2 bis 4, wobei der Gehalt an pfropfbarem Metallsalz am Ende von Schritt a) 0,1 bis 10 %, vorzugsweise 0,1 bis 5 %, des pfropfbaren Metallsalzes auf 99,9 bis 90 %, vorzugsweise 99,9 bis 95 %, des Fluorpolymers beträgt.

6. Verfahren nach einem der Ansprüche 1 bis 5, wobei das Antioxidans ein alkyliertes Monophenyl, ein alkyliertes Hydrochinon, ein Alkylidenbisphenol, eine Benzylverbindung, ein Acylaminophenol, ein Phosphit, ein Phosphonit oder ein Nitroxid der folgenden allgemeinen Formel ist: 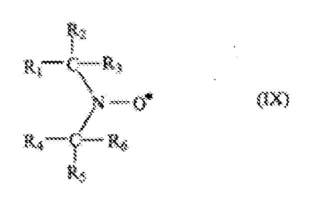 worin R₁, R₂, R₃, R₄, R₅ und R₆ für Folgendes stehen:
- geradkettige oder verzweigte C₁-C₂₀-Alkylgruppen, vorzugsweise C₁-C₁₀-Alkylgruppen, wie etwa Methyl, Ethyl, Propyl, Butyl, Isopropyl, Isobutyl, Tertiobutyl und Neopentyl, substituiert oder nicht substituiert,
- substituierte oder nicht substituierte C₆-C₃₀-Arylgruppen, wie etwa Benzyl, oder zyklische, gesättigte C₁-C₃₀-Aryl(phenyl)gruppen,
und worin die Gruppen R₁ und R₄ Teil einer gegebenenfalls substituierten zyklischen R₁-CNC-R₄-Struktur sein können, die gegebenenfalls aus Folgenden ausgewählt sein kann: 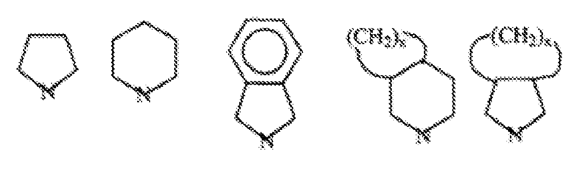 und worin x für eine ganze Zahl zwischen 1 und 12 steht.

7. Verfahren nach Anspruch 6, wobei das Antioxidans 2,6-Di-tert-butyl-4-methylphenol, 2,6-Di-tert-butylphenol (IRGANOX® 140), 2-tert-Butyl-4,6-dimethylphenol, 2,6-Di-tert-butyl-4-ethylphenol, 2,6-Di-tert-butyl-4-n-butylphenol, 2,6-Di-tert-butyl-4-isobutylphenol, 2,6-Di-cyclopentyl-4-methylphenol, 2-(β-Methylcyclohexyl)-4,6-dimethylphenol, 2,6-Di-octadecyl-4-methylphenol, 2,4,6-Tri-cyclohexylphenol, 2,6-Di-tert-butyl-4-methoxymethylphenol, o-tert-Butylphenol, 2,6-Dinonyl-4-methylphenol, 2,4-Dimethyl-6-(1'-methylundecyl)phenol, 2,4-Dimethyl-6-(1'-methylheptadecyl)phenol, Tetrakis(3-(3,5-di-tert-butyl-4-hydroxyphenyl)propionyloxymethyl)methan (IRGANOX® 1010), Thiodiethylen-bis(3,5-di-tert-butyl-4-hydroxyhydrocinnamat) (IRGANOX® 1035) oder Octadecyl-3,5-di-tert-butyl-4-hydroxyhydrocinnamat (IRGANOX® 1076) ist.

8. Verfahren nach einem der Ansprüche 1 bis 7, wobei der Gehalt an Antioxidans 0,001 bis 2 %, vorzugsweise 0,001 bis 1 %, auf 99,999 bis 98 %, vorzugsweise 99,999 bis 99 %, des Fluorpolymers beträgt.

9. Verfahren nach einem der vorangegangenen Ansprüche, wobei das Fluorpolymer PVDF ist.

10. Verfahren nach Anspruch 9, wobei das PVDF mindestens 85 Gew.% VDF enthält.

11. Struktur, die mindestens eine Schicht des durch Pfropfen durch Bestrahlung modifizierten Fluorpolymers, das gemäß dem Verfahren nach einem der vorangegangenen Ansprüche hergestellt wurde, und mindestens eine Schicht aus einem anderen Material aufweist.

12. Flaschen, Tanks, Behälter, Schläuche, Gefäße, Filme und Verpackungen, die mit einer Struktur nach Anspruch 11 hergestellt sind.

13. Struktur, die eine Innenschicht, welche mit dem zu transportierenden oder zu lagernden Fluid in Kontakt steht und aus dem durch Pfropfen durch Bestrahlung modifizierten Fluorpolymer, das nach einem der Ansprüche 1 bis 10 hergestellt wurde, gebildet ist, sowie eine an dieser direkt angebrachte Außenschicht aus Polyolefin aufweist.

14. Struktur nach Anspruch 13, wobei eine PVDF-Schicht auf der Seite der Schicht aus dem durch Pfropfen durch Bestrahlung modifizierten Fluorpolymer angeordnet ist.

15. Struktur nach Anspruch 13 oder 14, wobei zwischen der Schicht aus dem durch Pfropfen durch Bestrahlung modifizierten Fluorpolymer und der Polyolefinschicht eine funktionalisierte Polyolefinschicht angeordnet ist, die funktionelle Gruppen aufweist, die zum Reagieren mit den auf dem Fluorpolymer aufgepfropften funktionellen Gruppen imstande sind.

16. Struktur, die eine Schicht, die aus dem durch Pfropfen durch Bestrahlung modifizierten Fluorpolymer, das nach einem der Ansprüche 1 bis 10 hergestellt wurde, gebildet ist und zwischen zwei Polyolefinschichten angeordnet ist, aufweist.

17. Struktur nach Anspruch 16, wobei zwischen der Schicht aus dem durch Pfropfen durch Bestrahlung modifizierten Fluorpolymer und der einen oder den zwei Polyolefinschichten eine funktionalisierte Polyolefinschicht angeordnet wird, die funktionelle Gruppen aufweist, die zum Reagieren mit den auf dem Fluorpolymer aufgepfropften funktionellen Gruppen imstande sind.

18. Struktur, die eine Innenschicht, welche mit dem zu transportierenden oder zu lagernden Fluid in Kontakt steht und aus dem durch Pfropfen durch Bestrahlung modifizierten Fluorpolymer, das nach einem der Ansprüche 1 bis 10 hergestellt wurde, gebildet ist, sowie eine direkt an dieser angebrachte Außenschicht aus Polyamid aufweist.

19. Struktur nach Anspruch 18, wobei eine PVDF-Schicht auf der Seite der Schicht aus dem durch Pfropfen durch Bestrahlung modifizierten Fluorpolymer angeordnet ist.

20. Struktur nach Anspruch 18 oder 19, wobei zwischen der Schicht aus dem durch Pfropfen durch Bestrahlung modifizierten Fluorpolymer und der Polyamidschicht eine funktionalisierte Polymerschicht angeordnet wird, die funktionelle Gruppen aufweist, die zum Reagieren mit den auf dem Fluorpolymer aufgepfropften funktionellen Gruppen imstande sind, wobei das funktionalisierte Polymer mit dem Polyamid kompatibel ist.

21. Struktur nach einem der Ansprüche 13 bis 20, wobei die Innenschicht, die mit dem zu transportierenden oder zu lagernden Fluid in Kontakt steht, Ruß, Kohlenstoffnanoröhren oder andere Additive enthalten kann, die dazu imstande sind, sie leitfähig zu machen, um die Akkumulierung von statischer Elektrizität zu verhindern.

22. Struktur, die eine Außenschicht, die aus dem durch Pfropfen durch Bestrahlung modifizierten Fluorpolymer, das nach einem der Ansprüche 1 bis 10 hergestellt wurde, gebildet ist, sowie eine direkt an dieser angebrachte Schicht eines Substrats aufweist.

23. Struktur nach Anspruch 18, wobei eine PVDF-Schicht auf der Seite der Schicht aus dem durch Pfropfen durch Bestrahlung modifizierten Fluorpolymer angeordnet ist.

24. Struktur nach Anspruch 22 oder 23, wobei zwischen der Schicht aus dem durch Pfropfen durch Bestrahlung modifizierten Fluorpolymer und der Substratschicht eine funktionalisierte Polymerschicht angeordnet wird, die funktionelle Gruppen aufweist, die zum Reagieren mit den auf dem Fluorpolymer aufgepfropften funktionellen Gruppen imstande sind, wobei das funktionalisierte Polymer mit dem Substrat kompatibel ist.

25. Modifiziertes Fluorpolymer, das durch Pfropfen durch Bestrahlung einer pfropfbaren Verbindung, die eine einzige Doppelbindung C=C enthält, und eines Fluorpolymers erhalten wird und durch ein pfropfbares Metallsalz allein oder im Gemisch mit einem Antioxidans stabilisiert ist.

26. Modifiziertes Fluorpolymer nach Anspruch 25, wobei der Gehalt an der gepfropften, d.h. durch eine kovalente Bindung an das Fluorpolymer gebundenen, pfropfbaren Verbindung 0,1 bis 5 %, vorzugsweise 0,1 bis 2,5 %, auf 99,9 bis 95,0 %, vorzugsweise 99,9 bis 97,5 %, des Fluorpolymers beträgt.

27. Modifiziertes Fluorpolymer nach einem der Ansprüche 25 oder 26, wobei der Gehalt an gepfropftem, d.h. durch eine kovalente Bindung an das Fluorpolymer gebundenem, Metallsalz 0,1 bis 5 %, vorzugsweise 0,1 bis 2,5 %, auf 99,9 bis 95,0 %, vorzugsweise 99,9 bis 97,5 %, des Fluorpolymers beträgt.

28. Modifiziertes Fluorpolymer nach einem der Ansprüche 25 bis 27, wobei der Gehalt an Antioxidans 0,001 bis 2 %, vorzugsweise 0,001 bis 1 %, auf 99,999 bis 98,0 %, vorzugsweise 99,999 bis 99 %, des Fluorpolymers beträgt.

29. Modifiziertes Fluorpolymer nach einem der Ansprüche 25 bis 28, wobei das pfropfbare Metallsalz aus Zinkundecylenat, Calciumundecylenat und Natriumundecylenat ausgewählt ist.

30. Modifiziertes Fluorpolymer nach einem der Ansprüche 25 bis 29, wobei das Fluorpolymer PVDF ist.

31. Fluorpolymer nach Anspruch 30, wobei das PVDF mindestens 85 Gew.% VDF enthält.
